# EUROPÄISCHE PATENTSCHRIFT

(11) **EP 0 641 589 B1**
(45) Veröffentlichungstag und Bekanntmachung des Hinweises auf die Patenterteilung: **28.05.1997**
(21) Anmeldenummer: 94113797.8
(22) Anmeldetag: 02.09.1994
(51) Int. Cl.: B01D 53/04, B01D 5/00, B01D 53/14

(54) **Verfahren zur selektiven Rückgewinnung von Lösemitteln aus Lösemittelgasgemischen und Vorrichtung zur Durchführung des Verfahrens**
Process for selective recuperation of solvents from solvent gas mixtures and apparatus for carrying out the method
Procédé pour la récupération sélective de solvants de mélanges de solvants de gaz et dispositif pour la réalisation du procédé

(30) Priorität: 02.09.1993 DE 4329642; 08.07.1994 DE 4424155
(43) Veröffentlichungstag der Anmeldung: 08.03.1995
(73) Patentinhaber: Adolf Lony KG Flexible Verpackungen, D-67739 Lauterecken (DE); Rafflenbeul & Partner, 65931 Frankfurt/Main (DE)
(72) Erfinder: Berwian, Werner, Dipl.-Ing. (FH), D-55743 Idar-Oberstein (DE); Frohs, Thomas, Dipl.-Ing. (FH), D-67724 Höringen (DE); Rafflenbeul, Rolf, Dipl.-Ing. (FH), D-60529 Frankfurt/Main (DE)
(74) Vertreter: Kindler, Matthias, Dr. Dipl.-Chem.

(56) Entgegenhaltungen:
- DE-A- 2 735 568
- US-A- 3 436 839
- US-A- 3 551 102
- US-A- 4 536 197
- PATENT ABSTRACTS OF JAPAN vol. 012, no. 181 (C-499) 27. Mai 1988 & JP-A-62 289 217 (TOA NENRYO KOGYO KK) 16. Dezember 1987

## Beschreibung

Die Erfindung betrifft ein Verfahren zur selektiven Rückgewinnung von Lösemitteln aus Lösemittelgasgemischen, sowie eine Vorrichtung zur Durchführung eines derartigen Verfahrens.

In der überwiegenden Anzahl der technischen Verfahren, bei denen Lösemittel zum Einsatz gelangen, werden Lösemittelgemische verwendet. Zweck des Lösemittels ist es, mit Feststoffen intermediär eine Flüssigkeit herzustellen, die während des Gebrauchs eine definierte Verarmung der Flüssigkeitsbestandteile (Lösemittel) ermöglicht. Überwiegendes Einsatzgebiet solcher Lösemittelgemische sind Farben und Klebstoffe. Da Lösemittel sowohl als gesundheitsgefährdende Stoffe, aber auch als Wertstoffe, nicht in das Freie abgegeben werden sollen, ist es erforderlich, die Lösemittel in ausreichender Form zurückzuhalten.

Sorptionsanlagen, die Lösemittel aus Gas oder Gasgemischen, insbesondere aus Luft, zurückgewinnen, sind weitverbreitet. Überwiegend wird in solchen Anlagen das Lösemittelgas an einem Adsorptionsmittel, in der Regel Aktivkohle, adsorbiert und nach einer technisch zweckmässigen Anreicherung in der Kohle durch nachfolgende Verfahrensschritte in aufkonzentrierter Form abgetrieben (desorbiert) und zurückgewonnen. Ein derartiges Verfahren wird beispielsweise nach Druckprozessen, nach Lackierverfahren, und insbesondere nach Trocknungsschritten, bei denen die Lösemittel verdunsten, eingesetzt. Dort wird zum Transport des verdunsteten Lösemittelgases aus dem unmittelbaren Anwendungsbereich ein sogenanntes Schlepp-, Trocknungs- oder Trägergas, wie vorerwähnt, sehr häufig Luft, benutzt. Diese Schleppluft, in der Regel als Abgas bezeichnet, wird in eine Adsorbtionsanlage geführt, wo, wie oben erwähnt, das Lösemittelgas aus der Schleppluft entfernt und zurückgewonnen wird.

Während bei Monosystemen, die nur ein zu sorbierendes Lösemittel enthalten, die Rückgewinnung des desorbierten Lösemittels durch Kondensation unproblematisch in wiederverwendbarer Form gelingt, sind derzeit aufwendige Verfahrensoperationen erforderlich, um Lösemittelgemische getrennt zurückzugewinnen. Die bis heute eingesetzten Möglichkeiten hierzu sind die fraktionierte Kondensation des abgetriebenen (desorbierten) Lösemittelgasgemisches, und, alternativ hierzu, die Destillation und Rektifikation der anfallenden Lösemittelgemische. Bei beiden dieser Verfahrensvarianten wird das Lösemittelgemisch als ganzes aus dem Sorptionsmittel desorbiert und anschließend mittels Kondensation bzw. Destillation und Rektifikation fraktioniert. Beide Verfahren bedürfen sehr hoher technischer und finanzieller Aufwendungen zur Trennung der Lösemittel, insbesondere wenn azeotrope Gemische vorliegen. Bei komplizierten azeotropen Gemischen versagt darüber hinaus die fraktionierte Kondensation.

In US-A-3 436 839 wird ein Verfahren beschrieben, gemäß dem adsorbierbare und kondensierbare Stoffe aus einem Sorptionskörper in mindestens zwei getrennten Fraktionen desorbiert werden. Hierbei fließt ein erster Strom eines erhitzten Gases durch einen ersten Teil des Sorptionskörpers, wobei die kondensierbaren Stoffe, die in diesem ersten Teil adsorbiert sind, verdampft werden, und anschließend dieser erste Strom nach dem Verlassen des ersten Teils des Sorptionskörpers gekühlt wird, und die flüssigen, kondensierbaren Stoffe aus dem ersten Strom kondensiert und gesammelt werden. Gleichzeitig mit dem obigen ersten Strom wird ein zweiter Strom eines erhitzten Gases durch einen zweiten Teil des Sorptionskörpers geführt, wobei die in diesen zweiten Teil adsorbierten, kondensierten Stoffe verdampfen, dieser zweite Strom nach dem Austritt aus dem zweiten Teil des Sorptionskörpers (gleichzeitig mit dem ersten Strom, aber getrennt von diesem) gekühlt wird, und die flüssigen, kondensierbaren Stoffe aus dem zweiten Strom kondensiert und gesammelt werden. Bei den adsorbierten, kondensierbaren Stoffen handelt es sich im wesentlichen um Kohlenwasserstoffe oder Wasser.

Die Aufgabe der vorliegenden Erfindung besteht darin, ein Verfahren zur Rückgewinnung von Lösemitteln aus Lösemittelgasgemischen bereitzustellen, mit dem die obigen Nachteile vermieden werden können. Insbesondere soll das Verfahren technisch einfach, effektiv und ohne aufwendige Vorrichtungen durchzuführen sein. Dementsprechend besteht eine weitere Aufgabe darin, eine geeignete Vorrichtung zur Durchführung dieses Verfahrens zu schaffen.

Die Lösung der obigen, ersten Aufgabe besteht in einem Verfahren zur selektiven Rückgewinnung von Lösemitteln aus Lösemittelgasgemischen, das die Schritte der Sorption des Lösemittelgasgemisches in einem Sorptionsmittel, der Desorption des Lösemittelgasgemisches aus dem Sorptionsmittel, der Kondensation und des Auffangens des nach der Kondensation verflüssigten Lösemittelgasgemisches umfaßt, und das dadurch gekennzeichnet ist, daß einzelne Lösemittelgasfraktionen aus dem Sorptionsmittel fraktioniert desorbiert werden, und diese desorbierten Lösemittelgasfraktionen zeitlich versetzt kondensiert und getrennt voneinander aufgefangen werden.

Gemäß dem obigen Verfahren kann der Schritt der Sorption eine Adsorption oder Absorption des Lösemittelgasgemisches beinhalten.

Im Falle einer Adsorption wird hierbei das Lösemittelgasgemisch vorzugsweise mittels Aktivkohle(n), Molekularsieb(en) oder Kombinationen hiervon adsorbiert. Vorzugsweise weisen die Aktivkohlen und Molekularsiebe eine spezifische Oberfläche von bis zu 1500 m²/g auf und liegen in pelletisierter, fasriger oder pulvriger Form vor.

Für den Fall einer Absorption werden als Absorptionsmittel vorzugsweise Silikonöle oder hochsiedende Ester, wie z.B. Dioctylphthalat, eingesetzt.

Im allgemeinen wird bei dem erfindungsgemäßen Verfahren das Lösemittelgasgemisch bei einem Druck von 1 bar bis 10 bar und einer Temperatur von -20°C bis 80°C sorbiert.

In einer speziellen Ausführungsform wird weiterhin das Lösemittelgasgemisch zusammen mit einem Trägergas, vorzugsweise einem Inertgas, z.B. Stickstoff oder Kohlenstoffdioxid, oder Luft, durch das Sorptionsmittel bewegt. Die Konzentration des Lösemittelgasgemisches im Trägergas wird weiterhin vorzugsweise zwischen 0,5 g/m³ Trägergas und 100 g/m³ Trägergas eingestellt.

Das Trägergas kann schließlich im Durchlaufverfahren oder im Kreislaufverfahren eingesetzt werden.

Gemäß einer Variante des Verfahrens der vorliegenden Erfindung werden die einzelnen Lösemittelgasfraktionen bei einem konstanten Druck und einer konstanten Temperatur fraktioniert aus dem Sorptionsmittel desorbiert.

Gemäß einer anderen Variante ist es auch möglich, die einzelnen Lösemittelgasfraktionen fraktioniert aus dem Sorptionsmittel zu desorbieren, wobei man den Druck schrittweise senkt und/oder die Temperatur schrittweise erhöht. Hierbei wird man jeweils den Desorptionsdruck erniedrigen und/oder die Desorptionstemperatur erhöhen, wenn der Lösemittelgasmassenstrom aus dem Sorptionsmittel ein bestimmtes Niveau unterschritten hat. Der Lösemittelgasmassenstrom wird hierbei im Desorptionsgasstrom oder im kondensierten Lösemittelfraktionsstrom gemessen. Die Messung im Desorptionsgas erfolgt vorteilhafterweise mittels eines kalorischen Konzentrationsmeßgeräts und/oder eines Flammenionisationsdetektors, während die Messung im kondensierten Lösemittelfraktionsstrom vorzugsweise mittels eines Schwebekörpervolumenstrommessers durchgeführt wird.

Die Desorption der einzelnen Lösemittelgasfraktionen erfolgt vorteilhafterweise bei einem Druck im Bereich von 1 bar bis 10 bar und einer Temperatur im Bereich von 35°C bis 200°C, in Abhängigkeit von den zu trennenden Lösemitteln.

Die einzelnen Lösemittelgasfraktionen werden weiterhin gemäß einer bevorzugten Ausführungsform aus dem Sorptionsmittel mittels eines Trägergases fraktioniert desorbiert. Das Trägergas wird hierbei im allgemeinen aus der Reihe Inertgas (Stickstoff, Kohlenstoffdioxid), Luft oder Wasserdampf ausgewählt.

Eine spezielle Variante des erfindungsgemäßen Verfahrens, die insbesondere bei Lösemittelgasgemischen mit ähnlichem Sorptions- und Desorptionsverhalten geeignet ist, ist dadurch gekennzeichnet, daß man die bei einem bestimmten Druck und einer bestimmten Temperatur aus dem Sorptionsmittel desorbierte Lösemittelgasfraktion mit einem Zwischensorptionsmittel nochmals selektiv sorbiert und anschließend zeitlich versetzt fraktioniert desorbiert, und die einzelnen Fraktionen kondensiert und getrennt voneinander auffängt.

Vorzugsweise wird bei der obigen Ausgestaltung des erfindungsgemäßen Verfahrens die aus dem Sorptionsmittel desorbierte Lösemittelgasfraktion in dem Zwischensorptionsmittel bei einer im Vergleich zur Desorption aus dem Sorptionsmittel niedrigeren Temperatur und/oder höherem Druck sorbiert.

Im Falle einer Adsorption umfaßt das Zwischensorptionsmittel vorzugsweise Aktivkohle(n) und/oder Molekularsieb(e). Ein Zwischenabsorptionsmittel umfaßt vorteilhafterweise Silikonöle und/oder hoch siedende Ester.

Gemäß der obigen Verfahrensvariante unter Einsatz eines Zwischensorptionsmittels wird in einer speziellen Ausführungsform die Lösemittelgasfraktion aus dem Zwischensorptionsmittel bei einem Druck und einer Temperatur desorbiert, die dem Druck und der Temperatur der Desorption aus dem Sorptionsmittel entsprechen.

Weiterhin wird vorzugsweise das aus dem Zwischensorptionsmittel austretende, nicht-sorbierte Gas auf den Druck und die Temperatur gemäß der vorherigen Desorption aus dem Sorptionsmittel eingestellt und dem Sorptionsmittel wieder zugeführt.

Bei dem erfindungsgemäßen Verfahren können die einzelnen, desorbierten Lösemittelgasfraktionen vor der Kondensation unter Verwendung eines Trockenmittels getrocknet werden.

Bei der zeitlich versetzten Kondensation der einzelnen, desorbierten Lösemittelgasfraktionen wird im allgemeinen ein konstanter Druck und eine konstante Temperatur gewählt, die vorzugsweise im Bereich von 1 bar bis 10 bar bzw. von 10°C bis -50°C liegen, in Abhängigkeit von dem jeweiligen Lösemittelgasgemisch.

Die einzelnen kondensierten Lösemittelgasfraktionen werden bei dem erfindungsgemäßen Verfahren getrennt voneinander in verschiedenen Behältern derart aufgefangen, daß man in Abhängigkeit von der Zusammensetzung der Lösemittelfraktion den kondensierten Lösemittelfraktionsstrom von einem Behälter auf den nächsten Behälter umschaltet. Das Umstellen bzw. Umschalten erfolgt hierbei im allgemeinen mittels eines nach dem Kondensator angeordneten Stellgliedes.

Bei dem obigen Verfahrensschritt wird vorzugsweise die Zusammensetzung der Lösemittelfraktion im Desorptionsgas nach der Sorptionsanlage bzw. Zwischensorptionsanlage und/oder im kondensierten Lösemittelfraktionsstrom gemessen. Die Messung im Desorptionsgas erfolgt hierbei vorteilhafterweise mittels eines kalorischen Konzentrationsmeßgeräts und/oder eines Flammenionisationsdetektors, während man die Messung im kondensierten Lösemittelfraktionsstrom vorteilhafterweise mittels eines Refraktometers und/oder eines Dichtemeßgeräts durchführt.

Die Erfindung schafft weiterhin eine Vorrichtung zur Durchführung des erfindungsgemäßen Verfahrens, die eine Sorptionsanlage, eine Kühlvorrichtung zur Kondensation, einen Kondensator, eine Meßvorrichtung für die Zusammensetzung und/oder Menge des Desorptionsgases und/oder des Lösemittelkondensats, eine Umschalt- und Verteilervorrichtung für das Lösemittelkondensat und Auffangbehälter für die einzelnen, kondensierten Lösemittelfraktionen umfaßt.

Die Förderung der Gase in der obigen Vorrichtung erfolgt im allgemeinen mittels Ventilatoren.

Die Sorptionsanlage ist im allgemeinen mit einem Einlaß für Lösemittelgasgemische und einem entsprechenden Auslaß für das gereinigte Gas sowie einem Einlaß und einem Auslaß für zirkulierendes Desorptionsgas versehen. Weiterhin umfaßt sie einen Erhitzer für das zirkulierende Desorptionsgas.

Eine spezielle Ausführungsform der erfindungsgemäßen Vorrichtung umfaßt eine Zwischensorptionsanlage zwischen der Sorptionsanlage und der Kühlvorrichtung zur Kondensation sowie einen Kühler zur Abkühlung des Desorptionsgases zwischen der Sorptionsanlage und der Zwischensorptionsanlage.

Die erfindungsgemäße Vorrichtung kann weiterhin dadurch gekennzeichnet sein, daß sie einen Auffangbehälter für zu verwerfende Mischfraktionen vorsieht.

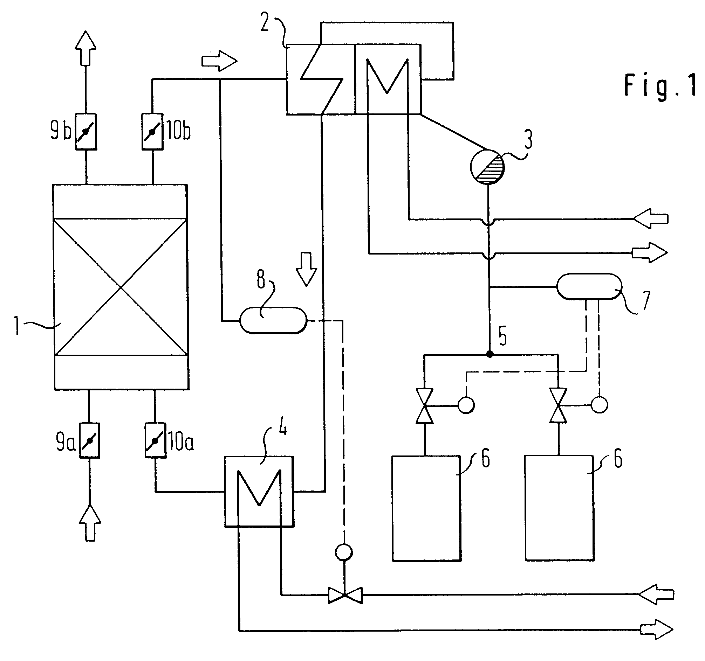

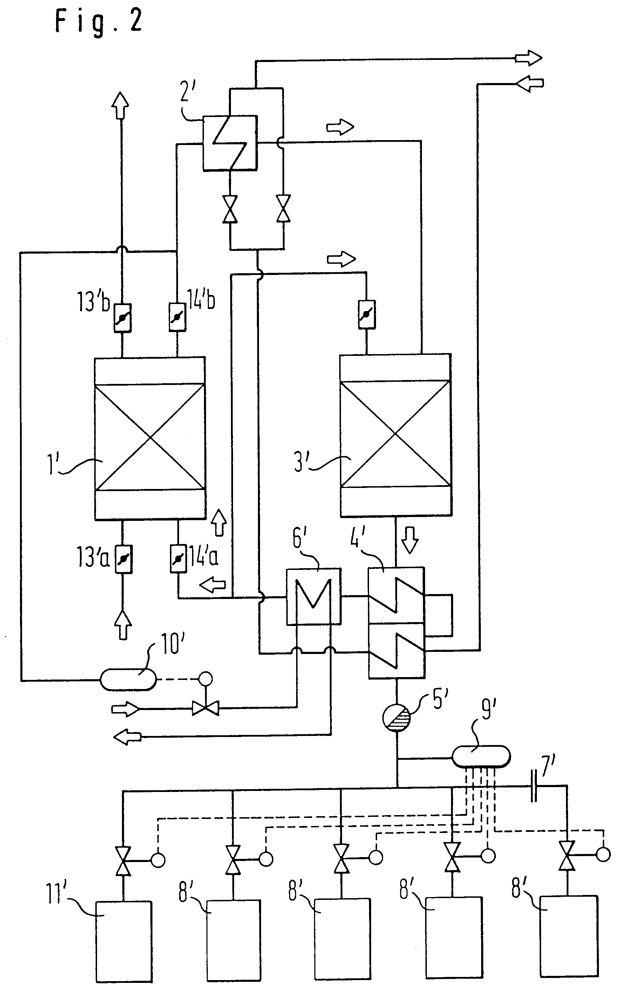

Die Erfindung wird im folgenden in Zusammenhang mit den Figuren 1 und 2 näher beschrieben.
- Fig. 1:: Vorrichtung zur Durchführung des erfindungsgemäßen Verfahrens bei Lösemittelgasgemischen mit unterschiedlichem Sorptions- und Desorptionsverhalten der einzelnen Lösemittel;
- Fig. 2:: Vorrichtung zur Durchführung des erfindungsgemäßen Verfahrens bei Lösemittelgasgemischen mit ähnlichem Sorptions- und Desorptionsverhalten der einzelnen Lösemittel.

Die in Fig. 1 dargestellte Vorrichtung ist zur selektiven Rückgewinnung von Lösemitteln geeignet, die ein deutlich unterschiedliches Sorptions- und Desorptionsverhalten zeigen.

Hierbei wird das mit einem Lösemittelgasgemisch, z.B. Ethylacetat und Butylglycol, beladene Abgas durch die Sorptionsanlage (1), die einen Einlaß für das Lösemittelgasgemisch (9a) und einen entsprechenden Auslaß für das gereinigte Gas (9b) umfaßt, geführt. Hierbei verbleiben die beiden Lösemittelgasgemischkomponenten in dem Sorptionsmittel.

In Abhängigkeit von dem Lösemittelmassenstrom, von der Sorptionsmittelmenge und den Umgebungsbedingungen (Druck, Temperatur) stellt sich nach einer bestimmten Zeit eine sogenannte Gleichgewichtsbeladung im Sorptionsmittel ein. Dies bedeutet, daß das Sorptionsmittel so viel Lösemittel aufgenommen hat, daß es im folgenden zumindest eine Lösemittelgaskomponente, die mit dem Abgas zugeführt wird, nicht mehr in ausreichender Form zurückhalten kann. Dementsprechend ist es dann erforderlich, das Sorptionsmittel zu entleeren, d.h. die sorbierten Lösemittelgaskomponenten zu desorbieren. Dies erfolgt bei ausgewählten Bedingungen hinsichtlich Druck, Temperatur und Trägergas(strom), so daß die Lösemittelgaskomponenten fraktioniert (zeitlich versetzt) desorbiert werden.

Der aus der Sorptionsanlage (1) über den Auslaß (10b) desorbierte Gasstrom, der im wesentlichen jeweils nur eine Lösungsmittelgaskomponente enthält, wird mittels eines Kühlers (2) auf eine vorbestimmte Temperatur gekühlt und in dem Kondensator (3) kondensiert. Über eine Umschalt- und Verteilervorrichtung (5) wird das Lösemittelkondensat in einen vorbestimmten Auffangbehälter (6) gelenkt. Das aus der Kühlvorrichtung (2) austretende, von dem Kondensat befreite Desorptionsgas wird anschließend in einem Erhitzer (4) erwärmt und über den Einlaß (10a) der Sorptionsanlage wieder zugeführt.

Für die Verfahrenssteuerung wird ein Meßgerät für den Lösemittelmassenstrom im Desorptionsgas (8) und für die Zusammensetzung des Lösemittels im kondensierten Lösemittelfraktionsstrom (7) vorgesehen.

Mittels eines Refraktometers und/oder eines Dichtemeßgeräts ist es möglich, die Qualität des kondensierten Lösemittels zu überprüfen, und in Abhängigkeit von der Zusammensetzung des Lösemittelkondensats, d.h. beim Umspringen der Kondensatzusammensetzung von der einen Lösemittelkomponente zu einer anderen Lösemittelkomponente, von dem einen Auffangbehälter (6) auf den nächsten Auffangbehälter (6) zu wechseln.

Ein kalorisches Konzentrationsmeßgerät und/oder ein Flammenionisationsdetektor ermöglichen es, eine Verringerung des bei einer bestimmten Temperatur und einem bestimmten Druck anfallenden Lösemittelgasmassenstroms zu erfassen. Bei Unterschreiten eines bestimmten Niveaus kann dann die Temperatur mittels des Erhitzers (4) derart erhöht werden, daß, nachdem die restlichen Bestandteile der ersteren Fraktion ausgetrieben worden sind, die nächste, fester sorbierte Fraktion desorbiert wird.

Gemäß der Fig. 2 wird eine Verfahrensweise und eine Vorrichtung dargestellt, die für den Fall des Vorliegens von mehreren Lösemittelgaskomponenten mit ähnlichen Sorptions- und Desorptionseigenschaften geeignet ist.

Das mit Lösemittelgasgemisch, z.B. Ethylacetat und Ethanol, befrachtete Abgas wird über die Einlaßöffnung (13'a) der Sorptionsanlage (1') zugeführt. Das gereinigte Abgas verläßt über die Auslaßöffnung (13'b) die Sorptionsanlage (1'). Der Sorptionsschritt wird solange durchgeführt, bis das Sorptionsmittel hinsichtlich seiner Aufnahmekapazität bezüglich einer oder mehrerer Lösemittelgaskomponenten erschöpft ist. Anschließend wird die Sorption unterbrochen, und die Sorptionsanlage (1') wird abgereichert. Hierzu wird über den Erhitzer (6') erhitzte Desorptionsluft mittels eines Einlasses (14'a) in die Sorptionsvorrichtung (1') geleitet. Das mit einer Lösemittelgasfraktion befrachtete Desorptionsgas wird über den Auslaß (14'b) in eine Kühlvorrichtung (2') geleitet, um das Gas auf eine bestimmte Temperatur abzusenken, und anschließend in die Zwischensorptionsvorrichtung (3') geleitet. Dort wird die desorbierte Lösemittelgasfraktion selektiv und schichtweise sorbiert, und eine im Vergleich zur Sorptionsanlage verbesserte, getrennte Sorption der einzelnen Komponenten der desorbierten Lösemittelgasfraktion erreicht.

Das von Lösemittelgas befreite Desorptionsgas wird nach der Zwischensorptionsanlage (3') über den Erhitzer (6') geleitet und der Sorptionsanlage (1') wieder zugeführt.

Mittels des Meßgeräts (10') für den Lösemittelgasmassenstrom, das den Massenstrom aus der Sorptionsgasleitung erfaßt, kann das Ende der Desorption der ersten Lösemittelgasfraktion aus der Sorptionsanlage (1') festgestellt werden.

Im folgenden Schritt wird die mit der ersten Lösemittelgasfraktion angereicherte Zwischensorptionsanlage (3') bei vorgegebenen Desorptionstemperaturen fraktioniert desorbiert. Die bei einer bestimmten Temperatur desorbierte erste Lösemittelgasfraktion wird mittels der Kühlvorrichtung (4') gekühlt und anschließend im Kondensator (5') auskondensiert. Die Qualität des auskondensierten Lösemittels wird über ein entsprechendes Meßgerät (9') kontrolliert, das auch die Umschalt- und Verteilervorrichtung (7') steuert, so daß die einzelnen Lösemittel in unterschiedlichen Auffangbehältern (8') aufgefangen werden können. Liegen Lösemittelgase vor, die ein nahezu gleiches Sorptionsverhalten aufweisen, so bildet sich bei der Desorption während des Übergangs zwischen zwei Lösemitteln eine Mischfraktion aus, die in einen hierfür vorzusehenden Verschnittbehälter (11') eingeleitet wird. In gleicher Weise empfiehlt es sich, die in den Leitungssystemen nach dem Kondensator (5') verbliebenen Restlösemittel der vorrausgegangenen Fraktion durch ein Zeitschaltinterval (Spülvorgang) ebenfalls in den Verschnittbehälter (11') zu leiten.

Im folgenden kann dann die Temperatur des im Kreislauf durch die Zwischensorptionsanlage (3') geführten Desorptionsgases mittels des Erhitzers (6') erhöht werden, um weitere Lösemittelgasfraktionen aus der Zwischensorptionsanlage (3') zu desorbieren, zu kondensieren und aufzufangen.

Ist die Zwischensorptionsanlage (3') vollständig entleert, so wird das dann im Kreislauf durch die Sorptionsanlage (1') geführte Desorptionsgas mittels des Erhitzers (6') auf eine höhere Temperatur eingestellt, um die nächste Lösemittelgasfraktion aus der Sorptionsanlage (1') zu lösen und dann gemäß den oben dargestellten Schritten mittels des Kühlers (2') abzukühlen, in der Zwischensorptionsanlage (3') selektiv in Schichten nochmals zu sorbieren und anschließend aus dieser Anlage zu desorbieren, in der Kühlvorrichtung (4') abzukühlen, im Kondensator (5') zu kondensieren und mittels der Umschalt- und Verteilervorrichtung (7') in verschiedenen Auffangbehältern (8') aufzufangen.

Im folgenden wird die Erfindung anhand eines konkreten Beispiels dargestellt.

### Beispiel

Es wird die selektive Lösemittelrückgewinnung aus einem Lösemittelgasgemisch, bestehend aus Toluol und Ethanol, mittels des erfindungsgemäßen Verfahrens und unter Verwendung der in Fig. 1 dargestellten Vorrichtung dargestellt.

Ausgangspunkt ist ein Gasgemisch aus 80 Vol.% Ethanol und 20 Vol.% Toluol. Dieses Gasgemisch wird unter den folgenden Bedingungen in einer mit Aktivkohle gefüllten Adsorptionsanlage adsorbiert.

| | |
|---|---|
| Adsorptionstemperatur: | 15°C |
| Adsorptionsdruck: | 1 bar |
| Adsorptionsträgergas: | Luft |
| Beladung des Trägergases mit Lösemittelgasgemisch: | 4 g/m³ |
| Aktivkohle: | Typ Chemviron, WS 45 spezifische Oberfläche: 1400 m²/g |

Der Adsorptionsvorgang wird gestoppt, wenn die Menge an Ethanol in dem aus dem Adsorber austretenden, gereinigten Abgas einen Grenzwert von 200 mg/m³ Abluft überschreitet.

Im Anschluß daran wird der Adsorber desorbiert. Für die Desorption werden die folgenden Bedingungen eingestellt:

| | Schritt I | Schritt II |
|---|---|---|
| Desorptionstemperatur: | 110°C | 150°C |
| Desorptionsdruck: | 1 bar | 1 bar |
| Desorptionsträgergas: | Luft | Luft |
| Fraktion: | Ethanol | Toluol |

Die im Schritt I ausgetriebene Lösemittelgasfraktion wird auf eine Temperatur von -45°C abgekühlt und bei dieser Temperatur kondensiert. Die Qualität des kondensierten Lösemittels wird mittels eines Refraktometers gemessen, und auch die Fließmenge des auskondensierten Lösemittels wird mit einem Schwebekörpermeßgerät (Rotameter) erfaßt. In einem ersten Auffangbehälter wird Ethanol mit einer Reinheit von 95% erhalten.

Nachdem mittels des Schwebekörpermeßgerätes eine Abnahme des Ethanolmassenstroms festgestellt wird, wird die Desorptionstemperatur auf 150°C erhöht (Schritt II), und der kondensierte Lösemittelstrom, der mit 5% Ethanolverunreinigung technisch ausreichend reines Toluol enthält, wird auf ein zweites Auffanggefäß umgeleitet.

Wird reineres Toluol benötigt, so kann über eine Zeit von ungefähr 5 Minuten eine Zwischentemperatur von 130°C eingestellt werden, und die sich dann bildende Mischfraktion kann in einen separaten Auffangbehälter geleitet werden. In diesem Fall wird Toluol mit einer Reinheit von 98% zurückgewonnen.

Mittels des erfindungsgemäßen Verfahrens und der erfindungsgemäßen Vorrichtung wird die Möglichkeit geschaffen, Lösemittel selektiv aus Lösemittelgasgemischen unter Einsparung teuerer Anlagen und hoher Energiekosten zurückzugewinnen. Eine solche Rückgewinnung ist unter dem heutigen Aspekt eines verstärkten Umweltschutzes von wesentlicher technischer und wirtschaftlicher Bedeutung.

## Patentansprüche

1. Verfahren zur selektiven Rückgewinnung von Lösemitteln aus Lösemittelgasgemischen, umfassend die Schritte der Sorption des Lösemittelgasgemisches in einem Sorptionsmittel, der Desorption des Lösemittelgasgemisches aus dem Sorptionsmittel, der Kondensation und des Auffangens des nach der Kondensation verflüssigten Lösemittelgasgemisches, dadurch **gekennzeichnet**, daß man einzelne Lösemittelgasfraktionen aus dem Sorptionsmittel fraktioniert desorbiert, diese desorbierten Lösemittelgasfraktionen zeitlich versetzt kondensiert und getrennt voneinander auffängt.

2. Verfahren nach Anspruch 1, dadurch **gekennzeichnet**, daß der Schritt der Sorption eine Adsorption oder eine Absorption des Lösemittelgasgemisches darstellt.

3. Verfahren nach Anspruch 1 oder 2, dadurch **gekennzeichnet**, daß man das Lösemittelgasgemisch bei einem Druck von 1 bar bis 10 bar und einer Temperatur von -20°C bis 80°C sorbiert.

4. Verfahren nach einem oder mehreren der vorhergehenden Ansprüche, dadurch **gekennzeichnet**, daß man das Lösemittelgasgemisch zusammen mit einem Trägergas durch das Sorptionsmittel bewegt.

5. Verfahren nach einem oder mehreren der vorhergehenden Ansprüche, dadurch **gekennzeichnet**, daß man die einzelnen Lösemittelgasfraktionen bei einem konstanten Druck und einer konstanten Temperatur fraktioniert aus dem Sorptionsmittel desorbiert.

6. Verfahren nach einem oder mehreren der vorhergehenden Ansprüche 1 bis 4, dadurch **gekennzeichnet**, daß man die einzelnen Lösemittelgasfraktionen fraktioniert aus dem Sorptionsmittel desorbiert, wobei man den Druck schrittweise senkt und/oder die Temperatur schrittweise erhöht.

7. Verfahren nach Anspruch 6, dadurch **gekennzeichnet**, daß man den Desorptionsdruck erniedrigt und/oder die Desorptionstemperatur erhöht, wenn der Lösemittelgasmassenstrom aus dem Sorptionsmittel ein bestimmtes Niveau unterschritten hat.

8. Verfahren nach einem oder mehreren der vorhergehenden Ansprüche, dadurch **gekennzeichnet**, daß man die einzelnen Lösemittelgasfraktionen aus dem Sorptionsmittel bei einem Druck im Bereich von 1 bar bis 10 bar und einer Temperatur im Bereich von 35°C bis 200°C fraktioniert desorbiert.

9. Verfahren nach einem oder mehreren der vorhergehenden Ansprüche, dadurch **gekennzeichnet**, daß man die einzelnen Lösemittelgasfraktionen aus dem Sorptionsmittel mittels eines Trägergases fraktioniert desorbiert.

10. Verfahren nach einem oder mehreren der vorhergehenden Ansprüche, dadurch **gekennzeichnet**, daß man die bei einem bestimmten Druck und einer bestimmten Temperatur aus dem Sorptionsmittel desorbierte Lösemittelgasfraktion mit einem Zwischensorptionsmittel nochmals selektiv sorbiert und anschließend zeitlich versetzt fraktioniert desorbiert, und die einzelnen Fraktionen kondensiert und getrennt voneinander auffängt.

11. Verfahren nach Anspruch 10, dadurch **gekennzeichnet**, daß man die aus dem Sorptionsmittel desorbierte Lösemittelgasfraktion in dem Zwischensorptionsmittel bei einer im Vergleich zur Desorption aus dem Sorptionsmittel niedrigeren Temperatur und/oder höherem Druck sorbiert.

12. Verfahren nach Anspruch 10 oder 11 dadurch **gekennzeichnet**, daß man die Lösemittelgasfraktion aus dem Zwischensorptionsmittel bei einem Druck und einer Temperatur desorbiert, die dem Druck und der Temperatur der Desorption aus dem Sorptionsmittel entsprechen.

13. Verfahren nach einem oder mehreren der Ansprüche 10 bis 12, dadurch **gekennzeichnet**, daß man das aus dem Zwischensorptionsmittel austretende, nicht sorbierte Gas auf den Druck und die Temperatur gemäß der vorherigen Desorption aus dem Sorptionsmittel einstellt und dem Sorptionsmittel wieder zuführt.

14. Verfahren nach einem oder mehreren der vorhergehenden Ansprüche, dadurch **gekennzeichnet**, daß man die einzelnen, desorbierten Lösemittelgasfraktionen vor der Kondensation unter Verwendung eines Trockenmittels trocknet.

15. Verfahren nach einem oder mehreren der vorhergehenden Ansprüche, dadurch **gekennzeichnet**, daß man die einzelnen, kondensierten Lösemittelgasfraktionen getrennt voneinander in verschiedenen Behältern derart auffängt, daß man in Abhängigkeit von der Zusammensetzung der Lösemittelfraktion den kondensierten Lösemittelfraktionstrom von einem Behälter auf den nächsten Behälter umschaltet.

16. Verfahren nach Anspruch 15, dadurch **gekennzeichnet**, daß man die Zusammensetzung der Lösemittelfraktion im Desorptionsgas nach der Sorptionsanlage bzw. Zwischensorptionsanlage und/oder im kondensierten Lösemittelfraktionsstrom mißt.

17. Vorrichtung zur Durchführung des Verfahrens gemäß einem der Ansprüche 1 bis 16, umfassend
eine Sorptionsanlage (1, 1'),
eine Kühlvorrichtung zur Kondensation (2, 4'),
einen Kondensator (3, 5'),
**gekennzeichnet** durch
eine Meßvorrichtung für die Zusammensetzung und/oder Menge des Desorptionsgases (8, 10') und/oder des Lösemittelkondensats (7, 9'),
eine Umschalt- und Verteilervorrichtung für das Lösemittelkondensat (5, 7') und
Auffangbehälter (6, 8') für die einzelnen, kondensierten Lösemittelfraktionen.

18. Vorrichtung nach Anspruch 17, dadurch **gekennzeichnet**, daß die Sorptionsanlage (1, 1') mit einem Einlaß für Lösemittelgasgemische (9a, 13'a) und einem entsprechenden Auslaß für das gereinigte Gas (9b, 13'b) sowie einem Einlaß (10a, 14'a) und einem Auslaß für zirkulierendes Desorptionsgas (10b, 14'b) versehen ist.

19. Vorrichtung nach Anspruch 18, dadurch **gekennzeichnet**, daß sie einen Erhitzer (4, 6') für das zirkulierende Desorptionsgas umfaßt.

20. Vorrichtung nach einem oder mehreren der Ansprüche 17 bis 19, dadurch **gekennzeichnet**, daß sie eine Zwischensorptionsanlage (3') zwischen der Sorptionsanlage (1') und dem Kühler zur Kondensation (4') sowie einen Kühler (2') zur Abkühlung des Desorptionsgases zwischen der Sorptionsanlage (1') und der Zwischensorptionsanlage (3') umfaßt.

## Claims

1. Process for the selective recovery of solvents from solvent gas mixtures, comprising the steps of sorbing the solvent gas mixture in a sorption agent, desorbing the solvent gas mixture from the sorption agent, and condensing and collecting the solvent gas mixture liquefied after the condensation, **characterized in that** individual solvent gas fractions are desorbed in a fractionated manner from the sorption agent, these desorbed solvent gas fractions being condensed staggered-in-time and collected separately from one another.

2. Process according to claim 1, **characterized in that** the step of sorbing represents an adsorption or absorption of the solvent gas mixture.

3. Process according to claim 1 or 2, **characterized in that** the solvent gas mixture is sorbed at a pressure of 1 bar to 10 bar and a temperature of -20°C to 80°C.

4. Process according to one or more of the preceding claims, **characterized in that** the solvent gas mixture is moved together with a carrier gas through the sorption agent.

5. Process according to one or more of the preceding claims, **characterized in that** the individual solvent gas fractions are desorbed in a fractionated manner out of the sorption agent at a constant pressure and a constant temperature.

6. Process according to one or more of the preceding claims 1 to 4, **characterized in that** the individual solvent gas fractions are desorbed in a fractionated manner out of the sorption agent, the pressure being stepwise reduced and/or the temperature being stepwise increased.

7. Process according to claim 6, **characterized in that** the desorption pressure decreases and/or the desorption temperature increases when the solvent gas mass flow out of the sorption agent falls below a certain level.

8. Process according to one or more of the preceding claims, **characterized in that** the individual solvent gas fractions are desorbed in a fractionated manner out of the sorption agent at a pressure in the range of 1 bar to 10 bar and a temperature in the range of 35°C to 200°C.

9. Process according to one or more of the preceding claims, **characterized in that** the individual solvent gas fractions are desorbed in a fractionated manner out of the sorption agent by means of a carrier gas.

10. Process according to one or more of the preceding claims, **characterized in that** the solvent gas fraction desorbed at a certain pressure and a certain temperature from the sorption agent is again selectively sorbed with an intermediate sorption agent and subsequently desorbed in a fractionated manner staggered-in-time, and the individual fractions are condensed and collected separately from one another.

11. Process according to claim 10, **charaterized in that** the solvent gas fraction desorbed from the sorption agent is sorbed in the intermediate sorption agent at a lower temperature and/or higher pressure in comparison to the desorption from the sorption agent.

12. Process according to claim 10 or 11, **characterized in that** the solvent gas fraction is desorbed from the intermediate sorption agent at a pressure and a temperature which correspond to the pressure and the temperature of the desorption from the sorption agent.

13. Process according to one or more of the claims 10 to 12, **characterized in that** the unsorbed gas emitting from the intermediate sorption agent is adjusted to the pressure and the temperature corresponding to the previous desorption from the sorption agent and led back to the sorption agent.

14. Process according to one or more of the preceding claims, **characterized in that** the individual desorbed solvent gas fractions are dried by using a drying agent before the condensation.

15. Process according to one or more of the preceding claims, **characterized in that** the individual condensed solvent gas fractions are collected separately from one another in different containers in such a manner that depending on the composition of the solvent fraction, the condensed solvent fraction flow is switched from one container to the next container.

16. Process according to claim 15, **characterized in that** the composition of the solvent fraction in the desorption gas is measured after the sorption plant or the intermediate sorption plant and/or in the condensed solvent fraction flow.

17. Apparatus for carrying out the process according to one of the claims 1 to 16, including
a sorption plant (1,1'),
a cooling apparatus for condensation (2,4'),
a condenser (3,5'),
**characterized by**
a measuring apparatus for the composition and/or quantity of the desorption gas (8,10') and/or the solvent condensate (7,9'),
a switching and distributing apparatus for the solvent condensate (5,7'), and
collecting containers (6,8') for the individual condensed solvent fractions.

18. Apparatus according to claim 17, **characterized in that** the sorption plant (1,1') is provided with an inlet for the solvent gas mixture (9a,13'a) and a corresponding outlet for the purified gas (9b,13'b), and an inlet (10a,14'a) and an outlet for circulating desorption gas (10b,14'b).

19. Apparatus according to claim 18, **characterized in that** it includes a heater (4,6') for the circulating desorption gas.

20. Apparatus according to one or more of the claims 17 to 19, **characterized in that** it includes an intermediate sorption plant (3') between the sorption plant (1') and the cooler for condensation (4') as well as a cooler (2') for cooling the desorption gas between the sorption plant (1') and the intermediate sorption plant (3').

## Revendications

1. Procédé pour la récupération sélective des solvants dans les mélanges solvant-gaz, comprenant les étapes de la sorption du mélange solvant-gaz dans un sorbant, de la désorption du mélange solvant-gaz du sorbant, de la condensation et du captage du mélange solvant-gaz liquéfié après la condensation, caractérisé par la désorption fractionnée de différentes fractions solvant-gaz du sorbant, la condensation en temps différé de ces fractions solvant-gaz rejetées et leur captage distinct.

2. Procédé selon la revendication 1, caractérisé par le fait que l'étape de la sorption représente une adsorption ou une absorption du mélange solvant-gaz.

3. Procédé selon les revendications 1 ou 2, caractérisé par la sorption du mélange solvant-gaz sous une pression de 1 bar à 10 bars et à une température de -20°C à 80°C.

4. Procédé selon une ou plusieurs des revendications ci-dessus, caractérisé par le fait que le mélange solvant-gaz traverse le sorbant avec un gaz porteur.

5. Procédé selon une ou plusieurs des revendications ci-dessus, caractérisé par la désorption fractionnée des différentes fractions solvant-gaz du sorbant sous une pression et à une température constantes.

6. Procédé selon une ou plusieurs des revendications 1 à 4 ci-dessus, caractérisé par la désorption fractionnée des différentes fractions solvant-gaz du sorbant en abaissant progressivement la pression et/ou en augmentant progressivement la température.

7. Procédé selon la revendication 6, caractérisé par l'abaissement de la pression de désorption et/ou l'augmentation de la température de désorption si le flux massique solvant-gaz sortant du sorbant descend en dessous d'un niveau déterminé.

8. Procédé selon une ou plusieurs des revendications ci-dessus, caractérisé par la désorption fractionnée des différentes fractions solvant-gaz du sorbant sous une pression de 1 bar à 10 bars et à une température de 35°C à 200°C.

9. Procédé selon une ou plusieurs des revendications ci-dessus, caractérisé par la désorption fractionnée des différentes fractions solvant-gaz du sorbant au moyen d'un gaz porteur.

10. Procédé selon une ou plusieurs des revendications ci-dessus, caractérisé par une sorption sélective effectuée avec un sorbant intermédiaire sur la fraction solvant-gaz rejetée par le sorbant sous une pression et à une température déterminées, suivie d'une désorption fractionnée en temps différé, d'une condensation des différentes fractions et leur captage distinct.

11. Procédé selon la revendication 10, caractérisé par la sorption dans le sorbant intermédiaire de la fraction solvant-gaz rejetée par le sorbant, à une température inférieure et/ou une pression supérieure en comparaison à la désorption du sorbant.

12. Procédé selon les revendications 10 ou 11, caractérisé par la désorption de la fraction solvant-gaz du sorbant intermédiaire sous une pression et à une température correspondant à la pression et à la température de la désorption du sorbant.

13. Procédé selon une ou plusieurs des revendications 10 à 12, caractérisé par l'ajustage du gaz non absorbé, ressortant du sorbant intermédiaire, à la pression et la température de la précédente désorption du sorbant et sa réintroduction dans le sorbant.

14. Procédé selon une ou plusieurs des revendications ci-dessus, caractérisé par le séchage des différentes fractions solvant-gaz rejetées avant la condensation en utilisant un agent de déshydratation.

15. Procédé selon une ou plusieurs des revendications ci-dessus, caractérisé par le captage des différentes fractions solvant-gaz condensées, séparément les unes des autres dans différents récipients, de manière à commuter le flux condensé de la fraction de solvant d'un récipient au récipient suivant en fonction de la composition de la fraction de solvant.

16. Procédé selon la revendication 15, caractérisé par la mesure de la composition de la fraction de solvant dans le gaz de désorption après l'installation de sorption ou l'installation de sorption intermédiaire et/ou dans le flux condensé de la fraction de solvant.

17. Dispositif pour l'exécution du procédé selon une des revendications 1 à 16, comprenant une installation de sorption (1, 1'), un dispositif de refroidissement pour la condensation (2, 4'), un condenseur (3, 5'), caractérisé par un dispositif de mesure pour la composition et/ou la quantité de gaz de désorption (8, 10') et/ou du condensat de solvant (7, 9'), un dispositif de commutation et de répartition pour le condensat de solvant (5, 7') et des récipients de captage (6, 8') pour les différentes fractions de solvant condensées.

18. Dispositif selon la revendication 17, caractérisé par l'équipement de l'installation de sorption (1, 1') d'une entrée pour les mélanges solvant-gaz (9a, 13'a) et d'une sortie correspondante pour le gaz nettoyé (9b, 13'b), ainsi que d'une entrée (10a, 14'a) et d'une sortie pour le gaz de désorption circulant (10b, 14'b).

19. Dispositif selon la revendication 18, caractérisé par le fait qu'il comporte un chauffage (4, 6') pour le gaz de désorption circulant.

20. Dispositif selon une ou plusieurs des revendications 17 à 19, caractérisé par le fait qu'il comporte une installation de sorption intermédiaire (3') entre l'installation de sorption (1') et le refroidisseur pour la condensation (4'), ainsi qu'un refroidisseur (2') pour le refroidissement du gaz de désorption entre l'installation de sorption (1') et l'installation de sorption intermédiaire (3').
